(19) Europäisches Patentamt
European Patent Office
Office européen des brevets

(11) Veröffentlichungsnummer. **0 017 881**
**B1**

# (12) EUROPÄISCHE PATENTSCHRIFT

(45) Veröffentlichungstag der Patentschrift: **02.03.83**

(51) Int. Cl.³: **C 08 F 283/06**, C 08 G 18/63

(21) Anmeldenummer: **80101840.9**

(22) Anmeldetag: **05.04.80**

(54) **Verfahren zur Herstellung von modifizierten Polyetherpolyolen und deren Verwendung in Verfahren zur Herstellung von Polyurethankunststoffen.**

(30) Priorität: **18.04.79 DE 2915610**

(43) Veröffentlichungstag der Anmeldung: **29.10.80 Patentblatt 80/22**

(45) Bekanntmachung des Hinweises auf die Patenterteilung: **02.03.83 Patentblatt 83/9**

(84) Benannte Vertragsstaaten: **BE DE FR GB IT NL**

(56) Entgegenhaltungen:
**DE-B-1 222 669**
**FR-A-2 249 099**
**US-A-3 383 351**
**CHEMICAL ABSTRACTS, Band 89, Nr. 6, August 1978, Seite 40, Nr. 44 791a Columbus, Ohio, U.S.A.**
**STIN:**
**TEXT:**

(73) Patentinhaber: **BAYER AG, Zentralbereich Patente, Marken und Lizenzen, D-5090 Leverkusen 1, Bayerwerk (DE)**

(72) Erfinder: **Ballé, Gerhard, Dr., Nietzschestrasse 14, D-5090 Leverkusen 1 (DE)**
Erfinder: **Rabe, Hansjürgen, Dr., Domblick 20, D-5090 Leverkusen 31 (DE)**
Erfinder: **Vehlewald, Peter, Dr., Fasanenstrasse 20, D-5653 Leichlingen (DE)**

**EP 0 017 881 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von modifizierten Polyetherpolyolen und deren Verwendung in Verfahren zur Herstellung von Polyurethankunststoffen

Durch Polymerisate oder Copolymerisate olefinisch ungesättigter Monomerer modifizierte Polyetherpolyole, die sogenannten Polymerpolyole, und ihre Verwendung zur Herstellung von Polyurethankunststoffen, insbesondere Schaumstoffen, sind bekannt. Ihre Herstellung erfolgt durch in situ-Polymerisation eines oder mehrerer Vinylmonomerer in üblichen Polyetherpolyolen (wobei die Verwendung von Acrylnitril und dessen Gemischen mit Styrol die größte technische Bedeutung erlangt hat) in Gegenwart eines radikalbildenden Polymerisationsinitiators. Herstellung und Verwendung derartiger Produkte werden z. B. in US-PS 3 304 273, US-PS 3 383 351, DE-PS 1 222 669, DE-PS 1 152 536 und DE-PS 1 152 537 beschrieben.

Polyurethane, die unter Verwendung derartiger Polymerpolyole hergestellt werden, zeichnen sich durch ein verbessertes Eigenschaftsniveau aus. Insbesondere wird die Härte und Tragfähigkeit von Polyurethan-Weichschaumstoffen günstig beeinflußt, so daß niedrigere Raumgewichte eingestellt und so Einsparungen an Rohmaterial erzielt werden können.

Darüber hinaus verleihen die Polymerpolyole Weichschaumstoffen eine größere Offenzelligkeit und wirken dadurch einer Schrumpfung der frischen Schaumstoffe bei der Lagerung entgegen. Schließlich lassen sich mit Hilfe der Polymerpolyole (bei geeigneter Auswahl des Basispolyäthers) sogenannte hochelastische, kalthärtende Schaumstoffe herstellen, wobei — im Gegensatz zu konventionellen Verfahren zur Herstellung derartiger Schaumstoffe — keine speziellen Polyisocyanate mit abgestimmter Reaktivität benötigt werden, sondern marktgängige Standardprodukte, insbesondere das bei der Weichschaumherstellung überwiegend verwendete Toluylendiisocyanat, eingesetzt werden können.

Die Polymerpolyole sind im Idealfall verhältnismäßig niedrig viskose, feinteilige, nichtsedimentierende Dispersionen des Polymerisats (vorzugsweise eines Acrylnitril- bzw. Acrylnitril-Styrol-Pfropf(co)-polymeren) in dem im wesentlichen unveränderten Polyetherpolyol. Kennzeichnende Merkmale für Qualität und Verarbeitbarkeit der Polymerpolyole sind Viskosität, Lagerstabilität (Sedimentationsbeständigkeit) und Teilchengröße. Diese Eigenschaften werden vor allem durch Art und Mengenverhältnisse der Ausgangsstoffe beeinflußt. Betrachtet man Monomermischungen aus Acrylnitril und Styrol sowie gegebenenfalls untergeordneten Anteilen weiterer Comonomerer, so liegt bei einem gegebenen Molekulargewicht des Basispolyäthers das Optimum der Eigenschaften des Polymerpolyols (möglichst niedrige Viskosität; Sediment- und Agglomeratfreiheit; niedrige Teilchengröße) innerhalb eines verhältnismäßig eng begrenzten Feldes von Herstellungsparametern, wobei insbesondere der Monomeranteil im Ansatz und das Monomerenverhältnis großen Einfluß auf die Produktqualität ausüben. Viskosität, Teilchengröße und Agglomeratanteil durchlaufen von einem reines Acrylnitril enthaltenden Polymerisationsansatz ausgehend, mit zunehmendem Styrolanteil des Ansatzes ein Minimum und steigen mit zunehmender Gesamtmenge an Monomerem, bezogen auf Basispolyether, stark an. Die genannten Größen nehmen aber auch bei abnehmendem Molekulargewicht des Ausgangspolyethers, sowie bei Abnahme der Polymerisationstemperatur unter 100° C zu.

Die Stabilisierung der Polymerpolyol-Dispersionen gegenüber Sedimentation wird durch den Einbau eines Teils der Moleküle des Basispolyethers in das in situ gebildete Polymere bewirkt. Es ist daher anzunehmen, daß die Reaktionsbedingungen die Pfropfhäufigkeit beeinflussen, so daß nur im Optimum des Parameterfeldes eine maximale Pfropfhäufigkeit erzielt wird, welche die Lagerstabilität und Verarbeitbarkeit des Produkts gewährleistet. Arbeitet man außerhalb der Grenzen dieses Feldes von Parametern, so sind erhöhte Viskosität und Teilchenvergröberung im Polymerpolyol bis hin zu Agglomeration und Sedimentation die Folge. Ebenso führt die Verwendung von Polyethern mit niedriger Kettenlänge (Äquivalentgewicht $< 1000$) zu hochviskosen, grobteiligen Suspensionen.

Der bisher bekannten Literatur ist keine technische Lehre zu entnehmen, wie diese Beschränkungen, denen das Verfahren zur Herstellung von Polymerpolyolen unterliegt, grundsätzlich zu überwinden sind und wie man auch bei hinsichtlich Viskosität und Teilchengröße kritischen Ansätzen die Produkteigenschaften verbessern könnte.

Erwünscht wäre es z. B., unabhängig vom Molekulargewicht des Ausgangspolyethers einen höheren Feststoffgehalt einzustellen, um die eigenschaftsverbessernde Wirkung des Polymerpolyols noch zu verstärken bzw. um dem Verarbeiter die Möglichkeit zu geben, das Produkt mit anderen Polyolen zu verschneiden und so den Anforderungen an die Eigenschaften seiner Polyurethanschaumstoffe anzupassen. Dabei darf aber die Verarbeitbarkeit des Produkts nicht beeinträchtigt werden, d. h. die Viskosität und Teilchengröße dürfen nicht zu stark ansteigen.

Es ist bereits vorgeschlagen worden, bei der in situ-Polymerisation übliche Molekulargewichtsregler und Telogene mitzuverwenden, um die Viskosität von Polymerpolyolen in kritischen Ansätzen zu erniedrigen. Dieses Vorgehen führte bisher deshalb nicht zum Ziel, da diese Substanzen, z. B. die in der Polymerisationstechnik üblichen Mercaptane, als Überträger mit hoher Übertragungskonstante in Konkurrenz zum Polyetherpolyol treten und die Pfropfausbeute eher verringert wird. Eine Verbesserung der Produktqualität ist zwar in gewissem Umfang durch Erhöhung der Initiatorkonzentration möglich; diesem Verfahren sind jedoch Grenzen gesetzt.

Erhöhte Peroxidzusätze bringen die Gefahr eines oxidativen Angriffs auf den Polyether mit sich. Dadurch werden Abbau- und Vernetzungsreaktionen begünstigt; dabei gebildete Nebenprodukte können bei der Herstellung von Schaumstoffen zu Kernverfärbungen führen. Aus dem technisch mit gutem Erfolg verwendeten Azoisobutyronitril (AIBN) entsteht beim thermischen Zerfall ein toxisches Nebenprodukt, weshalb auch in diesem Fall die Initiatorkonzentration möglichst niedrig gehalten werden sollte.

Neue Entwicklungen in der Verarbeitungstechnologie von Polyurethanweichschaumstoffen, insbesondere auf dem Polstermöbel- und Automobilsektor, haben den Wunsch nach Flammkaschierbarkeit und Hochfrequenz(»HF«)-Verschweißbarkeit von Weichschaumstoffen auf Polyetherbasis mit anderen Materialien, insbesondere mit Textilien, geweckt. Die auf dem Markt befindlichen Polyetherurethan-Weichschaumstoffe sind jedoch der HF-Verschweißung nicht zugänglich. Es hat daher nicht an Versuchen gefehlt, dies durch Einarbeitung von geeigneten Zusatzmitteln, vor allem Stoffen mit hoher Dielektrizitätskonstante, zu erreichen. Insbesondere erscheint es wünschenswert, dem Schaumstoffhersteller bereits fertig formulierte Rohstoffe zur Verfügung zu stellen, aus denen sich HF-verschweißbare Schaumstoffe ohne weitere Zusätze herstellen lassen.

In der vorliegenden Patentliteratur sind zahlreiche der radikalischen Polymerisation zugängliche ethylenisch ungesättigte Verbindungen als zur Herstellung von modifizierten Polymerpolyolen geeignet beschrieben. Jedoch haben neben den durch Polymerisation von Acrylnitril oder Styrol-Acrylnitril-Mischungen modifizierten Polyetherpolyolen bisher keine anderen Produkte technische Bedeutung erlangt, wenn man davon absieht, daß geringe Mengen anderer Monomeren mit Styrol und Acrylnitril kombiniert werden können, ohne daß dadurch die Produkteigenschaften signifikant verändert werden.

In den bekannten einschlägigen Patentschriften, z. B. DE-PS 1 222 669, sind unter den verwendbaren Monomeren auch die $\alpha,\beta$-ungesättigten Mono- und Polycarbonsäuren genannt worden, ohne daß bisher Produkte auf dieser Basis beschrieben wurden, die sich durch besondere Eigenschaften oder durch verbesserte Herstellbarkeit auszeichnen würden. Insbesondere ist der vorliegenden Literatur nicht zu entnehmen, daß die Mitverwendung von $\alpha,\beta$-ungesättigten Carbonsäuren bei der Polymerisation eine Lösung der eingangs geschilderten Stabilitätsprobleme ermöglichen und die Ausweitung der Verfahrensgrenzen gestatten würde.

Die vorliegende Patentanmeldung hat zum Ziel, ein Verfahren zur Herstellung von Polymerpolyolen zur Verfügung zu stellen, welches hinsichtlich der Höhe des Monomeranteils, des Monomerverhältnisses und der Auswahl des Basispolyethers universeller anwendbar ist als die bisher bekanntgewordenen Verfahren, und welches darüber hinaus Produkte liefert, die sich durch übliche Verschäumungstechniken in Schaumstoffe überführen lassen, welche bei hervorragenden mechanischen Eigenschaften HF-verschweißbar sind. Die größere Auswahl an Polyethern, die nach dem neuen Verfahren in Polymerpolyole überführt werden können, macht auch die Erschließung neuer Einsatzgebiete für die Produktklasse möglich.

Gegenstand der vorliegenden Erfindung ist ein Verfahren zur Herstellung von modifizierten Polyetherpolyolen durch radikalische Polymerisation von

I) 1 – 60 Gewichtsteilen eines Gemisches aus

(A) 20 – 99,9 Gew.-% Acrylnitril,
(B) 0 – 80 Gew.-% Styrol,
(C) 0,1 – 10 Gew.-% einer $\alpha,\beta$-ungesättigten Mono- oder Polycarbonsäure, und
(D) 0 – 20 Gew.-% einer oder mehrerer anderer copolymerisierbarer Verbindungen

II) 99 – 40 Gewichtsteilen eines Polyetherpolyols, wobei die Summe aus I) und II) 100 Gewichtsteile ergibt, in Gegenwart eines Radikale liefernden Polymerisationsinitiators,
welches dadurch gekennzeichnet ist, daß man
die $\alpha,\beta$-ungesättigte Mono- oder Polycarbonsäure C in Form eines Salzes mit einem primären, sekundären oder tertiären Mono- oder Polyamin in Polyetherpolyolen mit Äquivalentgewichten von 100 – 3000 und einer Hydroxylfunktionalität von 2 – 8 einsetzt und bei Temperaturen von mindestens 100° C polymerisiert.

Für die erfindungsgemäße Polymerisationsreaktion können alle bekannten $\alpha,\beta$-ungesättigten Carbonsäuren und Polycarbonsäuren verwendet werden, z. B. Acryl- und Methacrylsäure, Crotonsäure, Maleinsäure, Fumarsäure, Itaconsäure oder Citraconsäure, um nur die technisch wichtigsten zu nennen. Ebenso geeignet sind die durch eine Michael-Addition der Acrylsäure mit sich selbst zugänglichen Oligomeren der Formel

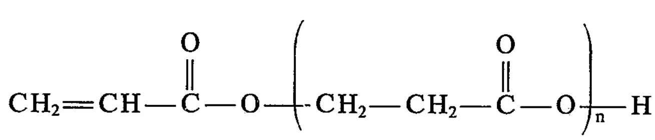

wobei n eine ganze Zahl von 1 – 5, insbesondere 1, bedeutet.

Weitere geeignete Carbonsäuren stellen die Halbester und Halbamide der α,β-ungesättigten Dicarbonsäuren, z. B. Monoethylmaleat oder Fumarsäure-n-butylamid, sowie die Halbester von gesättigten Dicarbonsäuren mit ungesättigten Alkohlen, z. B. Monoallylsuccinat oder -phthalat, dar.

Die Auswahl des zur Salzbildung verwendeten Amins ist nicht kritisch und könnte in einzelnen Fällen nur durch Schwerlöslichkeit des gebildeten carbonsauren Salzes in der Monomermischung eingeschränkt sein. So können praktisch alle aliphatischen und aromatischen Mono- und Polyamine sowie auch heterocyclischen Basen verwendet werden.

Als Beispiele für verwendbare Aminie seien genannt:

(a) Die aliphatischen offenkettigen oder ringförmigen Amine und Hydroxyamine mit 1 – 18 C-Atomen pro Alkylrest, z. B. Methylamin, Dimethylamin, Trimethylamin, Diethylamin, Triethylamin, Isopropylamin, Isobutylamin, n-Butylamin, Di-n-butylamin, Tri-n-butylamin, Äthanolamin, Diethanolamin, Triethanolamin, N-Methyldiethanolamin, N,N-Dimethylethanolamin, Diisopropanolamin, Pyrrolidin, Piperidin, Piperazin, N-2-Hydroxyethylpiperazin, [2.2.2]-Diazabicyclooctan, Morpholin, N-Methylmorpholin, Ethylendiamin oder N,N-Dimethylaminopropylamin.

(b) Die aromatischen Amine wie Anilin, N-Methylanilin, N,N-Dimethylanilin, N,N-Diethylanilin, N,N-Diethyl-p-toluidin, Phenylendiamine etc.

(c) Die heterocyclischen Stickstoffbasen, z. B. Pyridin, Picoline, Chinolin, Pyrrol, Imidazol, Oxazole, Thiazole usw., sowie deren substituierte Abkömmlinge.

Erfindungsgemäß bevorzugte Amine sind naturgemäß die tertiären Amine, da sie am wenigsten in die Urethanbildungsreaktion eingreifen. Andererseits wurde jedoch gefunden, daß mit Di-n-butylamin hergestellte Polymerpolyole ohne Schwierigkeiten verarbeitbar sind und daß auch die Verwendung von Hydroxyaminen wie Triethanolamin oder Methyldiethanolamin sich bei der Verarbeitung der resultierenden Produkte nicht negativ auswirkt. Wegen einer zu hohen Fremdstoffbelastung des Produkts ist es jedoch bevorzugt, Monoamine bzw. Polyamine mit einem Molekular- bzw. (bei Polyamin) Äquivalentgewicht zwischen 30 und 150, bevorzugt zwischen 56 und 100, einzusetzen.

Die für die erfindungsgemäße in situ-Pfropfpolymerisation geeigneten Monomeren sind im wesentlichen Acrylnitril und seine Mischungen mit Styrol, wobei der Anteil des Acrylnitrils am Gesamtmonomergemisch 20 – 99,9 Gew.-%, vorzugsweise 25 bis 80 Gew.-%, und der des Styrols 0 – 80 Gew.-%, vorzugsweise 20 bis 75 Gew.-%, ausmachen kann. Daneben können in untergeordneten Mengen weitere copolymerisierbare Comonomere mitverwendet werden, z. B. Ester ungesättigter Mono- und Dicarbonsäuren wie Acrylsäure, Methacrylsäure, Maleinsäure, Fumarsäure oder Itaconsäure mit niederen Alkoholen mit 1 – 8 C-Atomen, Mono- oder Diester der genannten Carbonsäuren mit Glykolen, Polyglykolen oder höherwertigen Alkoholen, ferner Vinylacetat, Vinylchlorid, Vinylidenchlorid, Methacrylnitril, Acrylamid, Methacrylamid, Ester der genannten ungesättigten Carbonsäuren mit Aminoalkoholen, z. B. 2-N,N-Dimethylaminoäthylmethacrylat, ferner Ester der Vinylphosphonsäure, z. B. Vinylphosphonsäuredimethylester.

Polyätherpolyole, die als Ausgangsmaterialien für das erfindungsgemäße Verfahren verwendet werden können, sind die an sich bekannten Additionsprodukte von cyclischen Äthern wie Äthylenoxid, Propylenoxid, Epichlorhydrin, Styroloxid, 1,2-Butylenoxid oder/und Tetrahydrofuran an Starterverbindungen mit mindestens zwei Zerewitinoff-aktiven Wasserstoffatomen im Molekül, wie sie z. B. in dem Buch »Polyurethanes, Chemistry and Technology«, Teil I, S. 32 ff. von J. H. Saunders und K. C. Frisch beschrieben sind. Geeignete Starterverbindungen sind z. B. Polyhydroxylverbindungen wie Alkylenglykole, Glycerin, Trimethylolpropan, Pentaerythrit, Sorbit, Glucose, Glucoside, Saccharose sowie die durch Kondensation von Formaldehyd zugänglichen Polyhydroxylverbindungen (Formose bzw. Formit), ferner Wasser, Ammoniak, Aminoalkohole wie Äthanolamin, Diäthanolamin oder Triäthanolamin und schließlich primäre oder/und sekundäre Amine oder Polyamine wie Äthylendiamin oder Anilin. Die als Ausgangsmaterialien für die Polymerpolyol-Herstellung dienenden Polyätherpolyole haben Äquivalentgewichte von 100 bis 3000 und eine Hydroxylfunktionalität von 2 – 8. Die Polyätherketten sind gewöhnlich aus Propylenoxid- und Äthylenoxidbausteinen aufgebaut. Die Äthylenoxideinheiten können statistisch entlang der Kette oder in zusammenhängenden Blöcken innerhalb oder/und am Ende der Kette angeordnet sein. Im letzteren Fall entstehen besonders reaktive Polyätherpolyole mit hohem Anteil an primären OH-Gruppen, welche als Ausgangsmaterial zur Herstellung der hochelastischen, kalthärtenden Weichschaumstoffe besonders geeignet sind.

Die Initiierung der radikalischen Polymerisation kann mit den üblichen radikalbildenden Initiatoren erfolgen. Dabei ist es erwünscht, daß ihre Zerfallsgeschwindigkeit möglichst hoch ist, d. h., die Halbwertszeit des thermischen Zerfalls sollte bei den Polymerisationsbedingungen möglichst niedrig sein, damit im Reaktionsmedium ständig ein ausreichendes Radikalangebot vorliegt. Derartige Initiatoren sind z. B. die organischen Peroxide wie Benzoylperoxid oder Lauroylperoxid, und insbesondere die Percarbonsäureester wie tert.-Butylperoctoat und tert.-Butylperpivalat und ferner aliphatische Azoverbindungen. Azoisobutyronitril besitzt die größte technische Bedeutung und ist für die Herstellung von Polymerpolyolen aus verschiedenen Gründen ein besonders gut geeigneter Initiator. Vorzugsweise werden 0,3 bis 2 Gew.-%, bezogen auf die Gesamtmenge an Monomeren, des

Initiators eingesetzt. Die Halbwertzeit des thermischen Zerfalls soll bei der Polymerisationstemperatur bevorzugt unter 5 Minuten liegen.

Die Durchführung des erfindungsgemäßen Verfahrens kann diskontinuierlich oder kontinuierlich erfolgen. Man kann z. B. eine Mischung, die das oder die Monomeren, den Initiator, das $\alpha,\beta$-ungesättigte carbonsaure Salz und gegebenenfalls einen Teil des einzusetzenden Polyethers enthält, in den in einem mit Rührwerk ausgestatteten Reaktor auf die Polymerisationstemperatur vorerhitzten Polyether eindosieren oder aber eine Mischung aller Reaktionsteilnehmer kontinuierlich in einen Reaktor einpumpen und das Produkt im gleichen Maße durch einen Überlauf entnehmen. Die Polymerisation kann in Gegenwart oder Abwesenheit zusätzlicher Lösungsmittel durchgeführt werden. Es empfiehlt sich jedoch, bei größeren Ansätzen im Technikum oder in der Produktion wegen der Möglichkeit einer vorzeitigen Initiierung der Polymerisation im zu dosierenden Monomergemisch den Initiator, gelöst in einem geeigneten organischen Lösungsmittel, dem Monomerenstrom erst kurz vor dem Eintritt in den Reaktionsraum, gegebenenfalls über ein Mischaggregat, zuzuführen oder diese Lösung getrennt in den Reaktor einzubringen.

Die Temperatur, bei der die Polymerisation durchgeführt wird, beträgt mindestens 100°C, vorzugsweise arbeitet man bei 120—140°C. Dabei kann die Reaktion in einem gegen den Außendruck abgeschlossenen System unter dem sich bei der gewählten Temperatur einstellenden Druck oder im offenen System unter Normaldruck ablaufen. Zweckmäßig verdrängt man den Luftsauerstoff aus der ganzen Apparatur durch Spülen mit einem Inertgas wie Stickstoff oder Argon und erhält während des Prozesses ständig eine Inertgasatmosphäre im System aufrecht. Das Produkt wird in üblicher Weise durch Vakuumdestillation, gegebenenfalls in einem Dünnschicht- oder Fallfilmverdampfer, von flüchtigen Anteilen, insbesondere den Restmonomeren, befreit.

Bei der Herstellung des Monomerengemischs ist die Reihenfolge der Zugabe der Einzelkomponenten relativ unkritisch, wenn man einmal in Vorversuchen die geeignete Monomerkombination ermittelt und sich von der Löslichkeit des ausgewählten Aminsalzes der $\alpha,\beta$-ungesättigten Carbonsäure überzeugt hat. Als günstig hat es sich erwiesen, erst die Monomeren in dem gewählten Verhältnis und Mengenanteil zusammen mit der verwendeten $\alpha,\beta$-ungesättigten Carbonsäure mit dem Basispolyether zu vermischen und zum Schluß das Amin, gegebenenfalls gelöst in einem inerten organischen Lösungsmittel, zuzusetzen. Der Polymerisationsinitiator wird zweckmäßig entweder in den Monomeren gelöst oder, z. B. ebenfalls gelöst in einem inerten organischen Lösungsmittel, erst dem Reaktionsgemisch zugesetzt.

Die nach dem erfindungsgemäßen Verfahren hergestellten Polymerpolyole sind zur Herstellung von Polyurethankunststoffen aller Art, vor allem von weichen und halbharten Polyurethanschaumstoffen, nach den bekannten Verfahren geeignet. Sie sind frei von grobteiligen, filtrierbaren und sedimentierenden Anteilen und zeigen eine wesentlich niedrigere Viskosität als die nach den bisher bekannten Verfahren hergestellten analogen Produkte.

Nach dem erfindungsgemäßen Verfahren sind auch gut verarbeitbare feinteilige Dispersionen herstellbar, wie sie nach den bekannten Verfahren sediment- und agglomeratfrei gar nicht oder nur mit einer derart hohen Viskosität gewonnen werden können, daß ihre Verarbeitung mit den üblichen Misch- und Dosieraggregaten, wie sie in der Polyurethantechnologie üblich sind, nicht möglich ist. So wird die Verwendung neuer Basispolyether bzw. höherkonzentrierter Produkte möglich, wodurch den Polymerpolyolen neue Einsatzgebiete eröffnet werden können. Ein Vorteil von Polymerpolyolen mit höheren Feststoffgehalten besteht darin, daß die mechanischen Eigenschaften von daraus hergestellten Polyurethanschaumstoffen, insbesondere Stauch- und Eindruckhärte, bei gleichem Raumgewicht verbessert werden, ferner daß die Freiheit des Verarbeiters in der Abmischung mit anderen Polyethern, Vernetzern, Weichmachern und anderen Zusätzen vergrößert wird, ohne daß der Feststoffgehalt unter ein Maß absinkt, bei dem kein eigenschaftsverbessernder Effekt mehr festzustellen ist. Die Herstellung von Polymerpolyolen mit hohem Feststoffgehalt ist darüber hinaus naturgemäß auch ökonomischer, da sie zu den gleichen Produktionskosten erfolgt wie die der bekannten Handelsprodukte, so daß bei der Rückverdünnung mit reinem Polyetherpolyol preisgünstige und zudem niedrigviskose Formulierungen erhalten werden.

Überraschenderweise hat sich überdies gezeigt, daß die nach dem erfindungsgemäßen Verfahren hergestellten Polymerpolyole sich im Hochfrequenzfeld mit anderen Substraten, z. B. Textilien, gut verschweißen lassen, ohne daß irgendwelche Zusätze von Stoffen mit hoher Dielektrizitätskonstante erforderlich sind. Dies stellt einen großen Fortschritt in der Verarbeitung von Polyetherurethan-Weichschaumstoffen dar.

Die Verfahren zur Herstellung von Polyurethankunststoffen unter Verwendung von Polymerpolyolen und die dabei erzielbaren technischen Verbesserungen sind an sich bekannt. Im Vordergrund des Interesses stehen die weichen elastischen und hochelastischen sowie die halbharten Schaumstoffe, denen die Polymerpolyole eine verbesserte Härte und Tragfähigkeit bei günstiger Härte/Raumgewichts-Relation verleihen. Auch andere Schaumstoffeigenschaften werden positiv beeinflußt, etwa die Offenzelligkeit und Schrumpffreiheit von Weichschaumstoffen. Für die maschinelle Verarbeitung der Polymerpolyole sind Agglomeratfreiheit und möglichst niedrige Viskosität wesentliche Voraussetzungen. Die übliche Dosierung mit Kolbenpumpenaggregaten setzt der Viskosität des geförderten Materials eine Obergrenze von ca. 1500—2000 mPa · s, die auch von den Polymerpolyole

enthaltenden Formulierungen unterschritten werden muß.

Mit anderen Fördereinrichtungen, z. B. Zahnradpumpen, ausgerüstete Schäummaschinen erlauben jedoch auch die Verarbeitung von Rohstoffen mit höherer Viskosität.

Gegenstand der Erfindung ist auch ein Verfahren zur Herstellung von gegebenenfalls zellförmigen Polyurethankunststoffen durch Umsetzung von

A) Polyisocyanaten mit
B) durch Pfropfpolymerisation modifizierten Polyätherpolyolen sowie gegebenenfalls
C) weiteren höhermolekularen und/oder niedermolekularen, gegenüber Isocyanaten reaktive Wasserstoffatome enthaltenden Verbindungen, gegebenenfalls in Gegenwart von
D) Treibmitteln, Katalysatoren und weiteren an sich bekannten Zusatzstoffen,

welches dadurch gekennzeichnet ist, daß als Komponente B) die erfindungsgemäß zugänglichen Polymerpolyole eingesetzt werden.

Für die Durchführung des erfindungsgemäßen Verfahrens werden eingesetzt:

1. Als Ausgangskomponenten aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

   $Q\,(NCO)_n$

   in der
   $n = 2-4$, vorzugsweise 2,
   und
   Q einen aliphatischen Kohlenwasserstoffrest mit 2–36, vorzugsweise 6–10 C-Atomen,
   einen cycloaliphatischen Kohlenwasserstoffrest mit 4–15, vorzugsweise 5–10 C-Atomen,
   einen aromatischen Kohlenwasserstoffrest mit 6–15, vorzugsweise 6–13 C-Atomen,
   oder einen araliphatischen Kohlenwasserstoffrest mit 8–15, vorzugsweise 8–13 C-Atomen,
   bedeuten, z. B. Äthylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, sowie Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonyl-isocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 162) sowie in den DE-Offenlegungsschriften 2 504 400, 2 537 685 und 2 552 350 beschrieben werden, Norbornan-Diisocyanate gemäß US-Patentschrift 3 492 330, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z. B. das 2,4- und 2,6-Toluylendiisocyanat sowie beliebige Gemische dieser Isomeren (»TDI«), Polyphenyl-polymethylen-polyisocyanate, wie sie durch Anilin-Formaldehyd-Kondensation und anschließende Phosgenierung hergestellt werden (»rohes MDI«) und Carbodiimidgruppen, Urethangruppen, Allophanatgruppen, Isocyanuratgruppen, Harnstoffgruppen oder Biuretgruppen aufweisenden Polyisocyanate (»modifizierte Polyisocyanate«), insbesondere solche modifizierten Polyisocyanate, die sich vom 2,4- und/oder 2,6-Toluylendiisocyanat bzw. vom 4,4'- und/oder 2,4'-Diphenylmethandiisocyanat ableiten.

2. Als Ausgangskomponenten ferner ggf. Verbindungen mit mindestens zwei gegenüber Isocyanaten reaktionsfähigen Wasserstoffatomen von einem Molekulargewicht in der Regel von 400 – 10 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 400 bis 7000, vorzugsweise 1000 bis 5000, z. B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind.

Vertreter der genannten erfindungsgemäß gegebenenfalls zu verwendenden Verbindungen sind z. B. in High Polymers, Vol. XVI, »Polyurethanes, Chemistry and Technology«, verfaßt von Saunders-Frisch, Interscience Publishers, New York, London, Band I, 1962, Seiten 32 – 42 und Seiten 44 – 54 und Band II, 1964, Seiten 5 – 6 und 198 – 199, sowie im Kunststoff-Handbuch, Band VII, Vieweg-Höchtlen, Carl-Hanser-Verlag, München, 1966, z. B. auf den Seiten 45 – 71, beschrieben. Selbstverständlich können Mischungen der obengenannten Verbindungen mit mindestens zwei gegenüber Isocyanaten reaktionsfähigen Wasserstoffatomen mit einem Molekulargewicht von 400 – 10 000, z. B. Mischungen von Polyäthern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

3. Gegebenenfalls können als Ausgangskomponenten Verbindungen mit mindestens zwei gegenüber Isocyanaten reaktionsfähigen Wasserstoffatomen und einem Molekulargewicht von 32 bis 400 mitverwendet werden. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:
Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Äthanolamin, Diäthanolamin, N-Methyldiäthanolamin, Triäthanolamin und 3-Aminopropanol.

Als niedermolekulare Polyole kommen erfindungsgemäß auch die Gemische von Hydroxyaldehyden und Hydroxyketonen (»Formose«) bzw. die hieraus durch Reduktion erhaltenen mehrwertigen Alkohole (»Formit«) in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß geeignete aliphatische Diamine sind beispielsweise Äthylendiamin, 1,4-Tetramethylendiamin, 1,11-Undecamethylendiamin, 1,12-Dodecamethylendiamin sowie deren Gemische,

1-Amino-3,3,5-trimethyl-5-aminomethylcyclohexan (»Isophorondiamin«), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z. B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure; Semicarbazido-alkylen-hydrazide wie z. B. β-Semicarbazidopropionsäurehydrazid (DE-Offenlegungsschrift 1 770 591), Semicarbazido-alkylencarbazinester wie z. B. 2-Semicarbazidoäthyl-carbazinester (DE-Offenlegungsschrift 1 918 504) oder auch Amino-semicarbazid-Verbindungen wie z. B. β-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Ferner können gegenüber Isocyanaten monofunktionelle Verbindungen in Anteilen von 0,01 bis 10 Gew.-%, bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Äthylhexanol, Octanol, Dodecanol, die verschiedenen Amylalkohole, Cyclohexanol, Äthylenglykolmonoäthyläther.

4. Gegebenenfalls als Hilfs- und Zusatzmittel:

a) Wasser und/oder leicht flüchtige anorganische oder organische Substanzen als Treibmittel. Als organische Treibmittel kommen z. B. Aceton, Äthylacetat, halogensubstituierte Alkane wie Methylenchlorid, Chloroform, Äthylidenchlorid, Vinylidenchlorid, Monofluortrichlormethan, Chlordifluormethan, Dichlordifluormethan, ferner Butan, Hexan, Heptan oder Diäthyläther, als anorganische Treibmittel z. B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden. Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

b) Katalysatoren der an sich bekannten Art, z. B. tertiäre Amine, wie Triäthylamin, Tributylamin, N-Methyl-morpholin, N-Äthyl-morpholin, N,N,N',N'-Tetramethyl-äthylendiamin, Pentamethyl-diäthylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexalamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol,

Nonylphenol oder Bisphenol, in Frage.
Gegenüber Isocyanatgruppen aktive Wasserstoffatome aufweisende tertiäre Amine als Katalysator sind z. B. Triäthanolamin, Triisopropanolamin, N-Methyl-diäthanolamin, N-Äthyldiäthanolamin, N,N-Dimethyl-äthanolamin, deren Umsetzungsprodukte mit Alkylenoxiden wie Propylenoxid und/oder Äthylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diäthylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoff-aktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assiziate und ihre katalytische Wirkung werden in den DE-Offenlegungsschriften 2 062 288, 2 062 289, 2 117 576 (US-Patentschrift 3 758 444), 2 129, 198, 2 330 175 und 2 330 211 beschrieben.

Erfindungsgemäß können auch organische Metallverbindungen, insbesondere organische Zinnverbindungen, als Katalysatoren verwendet werden. Als organische Zinnverbindungen kommen neben schwefelhaltigen Verbindungen wie Di-n-octyl-zinn-mercaptid (DE-Asulegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Diäthylamin oder stearinsaures Diäthanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.
Als Schaumstabilisatoren kommen vor allem Polyäthersiloxane, speziell wasserlösliche Vertreter, in Frage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysoloxan-Polyoxyalkylen-Copolymere gemäß DE-Offenlegungsschrift 2 558 523.

d) Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Tris-chloräthylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113, beschrieben.

Durchführung des erfindungsgemäßen Verfahrens

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Bei der Schaumstoffherstellung kann erfindungsgemäß die Verschäumung auch in geschlossenen Formen durchgeführt werden. Dabei wird das Reaktionsgemisch in eine Form eingetragen. Als Formmaterial kommt Metall, z. B. Aluminium, oder Kunststoff, z. B. Epoxidharz, in Frage. In der Form schäumt das schäumfähige Reaktionsgemisch auf und bildet den Formkörper. Die Formverschäumung kann dabei so durchgeführt werden, daß das Formteil an seiner Oberfläche Zellstruktur aufweist, sie kann aber auch so durchgeführt werden, daß das Formteil eine kompakte Haut und einen zelligen Kern aufweist. Erfindungsgemmß kann man in diesem Zusammenhang so vorgehen, daß man in die Form so viel schäumfähiges Reaktionsgemisch einträgt, daß der gebildete Schaumstoff die Form gerade ausfüllt. Man kann aber auch so arbeiten, daß man mehr schäumfähiges Reaktionsgemisch in die Form einträgt, als zur Ausfüllung des Forminneren mit Schaumstoff notwendig ist. Im letztgenannten Fall wird somit unter »overcharging« gearbeitet; eine derartige Verfahrensweise ist z. B. aus den US-Patentschriften 3 178 490 und 3 182 104 bekannt.

Bei der Formverschäumung werden vielfach an sich bekannte »äußere Trennmittel«, wie Siliconöle, mitverwendet. Man kann aber auch sogenannte »innere Trennmittel«, gegebenenfalls im Gemisch mit äußeren Tennmitteln, verwenden, wie sie z. B. aus den DE-Offenlegungsschriften 2 121 670 und 2 307 589 bekanntgeworden sind.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransportbandverfahren hergestellt werden.

Die folgenden Beispiele erläutern die erfindungsgemäßen Verfahren. Wenn nicht anders vermerkt, sind Mengenangaben als Gewichtsteile bzw. Gewichtsprozente zu verstehen.

In den nachfolgenden Beispielen werden die folgenden Abkürzungen und Bezeichnungen verwendet:

| | |
|---|---|
| AIBN: | Azoisobutyronitril (radikalischer Polymerisationsinitiator) |
| AS: | Acrylsäure |
| DAS: | Dimere Acrylsäure $CH_2=CH-CO-O-CH_2-CH_2-COOH$ |
| MAS: | Methacrylsäure |
| MSA: | Maleinsäureanhydrid |
| ITS: | Itaconsäure |
| TEA: | Triethylamin |
| DBA: | Di-n-butylamin |
| TELA: | Triethanolamin |
| MDELA: | Methyldiethanolamin |
| DMA: | N,N-Dimethylanilin |
| Polyol A: | Auf Trimethylolpropan gestarteter Polypropylenoxidpolyether mit endständigen Polyoxyethylenblöcken, einem Ethylenoxidanteil von 17% und einem Molekulargewicht von ca. 4800. |
| Polyol B: | Auf Trimethylolpropan gestartetes Polypropylenoxid mit einem Molekulargewicht von ca. 3000. |
| Polyol C: | Auf Glycerin gestarteter Polypropylenoxidpolyether mit endständigen Polyoxyethylenblöcken (5%) und einem Molekulargewicht von ca. 3000. |
| Polyol D: | Polypropylenglykol mit einem Molekulargewicht von ca. 2000. |
| Polyol E: | Polypropylenglykol mit 5% endständigen Polyoxyethylenblöcken. Molekulargewicht ca. 2000. |
| Polyol F: | Polypropylenglykol mit einem Molekulargewicht von ca. 1000. |
| Polyol G: | Propoxyliertes Trimethylolpropan mit einem Molekulargewicht von ca. 300. |
| Polyol H: | Auf Trimethylolpropan gestarteter Polypropylenoxidpolyether mit 13% endständig eingebauten Polyoxyethylenblöcken und einem Molekulargewicht von ca. 6000. |

Die Viskositäten wurden mit Hilfe des Haake-Viskotesters VT 02 (Spindel Nr. 1) bei Raumtemperatur (22 – 23°C) bestimmt. Zur Ermittlung des nichtfiltrierbaren Anteils wurde durch ein Metallsieb von 100 µm Maschenweite filtriert, der Siebrückstand wurde mit Methanol gewaschen, getrocknet und ausgewogen; die gefundenen Mengen sind auf den Gesamtfeststoff bezogen.

## Beispiel 1

100 g des Polyols A wurden in einem mit Flügelrührer, Rückflußkühler, Thermometer, Gaseinleitungsrohr und Tropftrichter ausgestatteten Reaktionsgefäß, welches durch ein Ölbad beheizt wurde, auf 120°C erhitzt. Im Laufe von 2 Stunden wurde eine Mischung aus 500 g Polyol A, 140 g Styrol, 240 g Acrylnitril, 20 g DAS, 20,7 g TELA und 4 g AIBN (1%, bezogen auf Monomere) durch den Tropftrichter eindosiert. Nach beendeter Zugabe wurde noch 4 Stunden unter Rühren nacherhitzt und schließlich der flüchtige Anteil im Vakuum abdestilliert. Es resultierte eine schwach gelbliche, feinteilige, von Agglomeratteilchen und Sediment freie Dispersion mit einer Viskosität von 4100 mPa · s bei 22°C. Die Hydroxylzahl betrug 31,9, die Säurezahl 2,1 und die Destillatmenge 32 g. Das Destillat bestand laut Gaschromatogramm aus Acrylnitril und Styrol und enthielt Spuren TELA. Aus den analytischen Daten folgt ein Monomerumsatz von 92% und ein Feststoffgehalt der Dispersion von 38%.

Zum Vergleich wurde der Versuch wiederholt, wobei nicht das Aminsalz der DAS, sondern diese selbst als Comonomeres verwendet wurde. Bei sonst gleicher Verfahrensweise entstand eine hochviskose, grießige Paste, an der eine Viskosität von 55 000 mPa · s bei 22°C gemessen wurde, und die für die Weiterverarbeitung zu Polyurethankunststoffen ungeeignet war.

## Beispiel 2

Unter den gleichen Bedingungen wie in Beispiel 1 wurde bei 120°C in eine Vorlage aus 1500 g Polyol A eine Mischung aus 3000 g Polyol A, 1125 g Styrol, 1800 g Acrylnitril, 75 g AS, 134 g DBA und 30 g AIBN im Laufe von 5 Stunden eingetropft und das Reaktionsgemisch noch 3 Stunden bei 120°C nachgerührt. Die Vakuumdestillation ergab 249 g Destillat, das Produkt war eine gelbstichig-weiße, homogen-feinteilige Dispersion mit einer Viskosität von 4600 mPa · s/23°C, einer Hydroxylzahl von 22,2, einer Säurezahl von 1,6 und einem Feststoffgehalt von 39,1%.

Der Versuch wurde in einem um den Faktor 10 vergrößerten Ansatz in einem 100-l-Edelstahlkessel wiederholt, wobei dem zudosierten Gemisch zur Viskositätserniedrigung 3000 g Toluol zugesetzt wurden. Das Produkt besaß einen Feststoffgehalt von 39,2%, eine Viskosität von 4700 mPa · s, eine OH-Zahl von 19,3 und Säurezahl von 2,4. Der Versuch ließ sich ohne Schwierigkeiten auch in größere Maßstäbe übertragen.

## Beispiel 3

Es wurde so verfahren wie in Beispiel 1. Die Vorlage bestand aus 100 g Polyol A, und folgende Mischung wurde bei 120°C im Verlauf von 2 Stunden eingetropft:

| | |
|---|---|
| Polyol A | 500 g |
| Styrol | 150 g |
| Acrylnitril | 240 g |
| MAS | 12 g |
| TELA | 20,7 g |
| AIBN | 4 g |

| | |
|---|---|
| Destillat | 32 g |
| Feststoffgehalt | 38,1% |
| Monomerumsatz | 92% |
| Viskosität | 4200 mPa · s/23°C |
| OH-Zahl | 33,9 |
| Säurezahl | 2,1 |

Dieser Ansatz wurde um den Faktor 67,5 vergrößert und ebenfalls in einem 100-l-Edelstahlkessel analog Beispiel 2 wiederholt. Das Produkt war eine feinteilige, stabile Dispersion mit einem Feststoffgehalt von 39,5%, einer Hydroxylzahl von 37,2, einer Säurezahl von 2,4 und einer Viskosität von 6000 mPa · s. Auch dieser Versuch ließ sich mit dem gleichen Ergebnis in den technischen Maßstab übertragen.

Beispiel 4

300 g Polyol A wurden auf 120°C erhitzt und im Laufe von 2 Stunden mit der folgenden Mischung versetzt:

| | |
|---|---|
| Polyol A | 1800 g |
| Styrol | 360 g |
| Acrylnitril | 530 g |
| DAS | 10 g |
| TELA | 10 g |
| AIBN | 9 g |

Im Vakuum wurden insgesamt 55,5 g flüchtige Anteile abdestilliert. Das entspricht einem Umsatz von 94% der eingesetzten Monomeren und einem Feststoffgehalt von 28,7%. Es entstand eine sehr feinteilige Dispersion mit einer Viskosität von 3700 mPa · s/22° C.

Beispiel 5

Dieses Beispiel zeigt, daß der Effekt der Viskositätserniedrigung bereits bei einer nur teilweisen Salzbildung der $\alpha,\beta$-ungesättigten Carbonsäure eintritt. Hierbei wurde die verwendete Carbonsäure in einem Versuch gar nicht, in einem weiteren Versuch nur zu 50% mit dem Amin neutralisiert. Die Durchführung erfolgte analog Beispiel 1.

| | Versuch I*) | II |
|---|---|---|
| Vorlage: Polyol A (unter Stickstoff erhitzt auf 120°C) | 100 g | 100 g |
| Eindosiertes Gemisch: | | |
| Polyol A | 500 g | 500 g |
| Styrol | 156 g | 156 g |
| Acrylnitril | 240 g | 240 g |
| AS | 4 g | 4 g |
| TELA | – | 4,1 g |
| Toluol | 200 g | 200 g |
| AIBN | 4 g | 4 g |
| Monomerumsatz | 95,5% | 98,8% |
| Feststoffgehalt | 38,9% | 39,7% |
| Viskosität bei 23°C | 18 000 mPa· s | 3900 mPa· s |

Aussehen:

I) Im allgemeinen feinteilige, jedoch von grobteiligen Agglomeratanteilen durchsetzte Dispersion.
II) Feinteilige, agglomerat- und sedimentfreie Dispersion.
*) Vergleich ohne Amin.

Beispiele 6 bis 18

Die folgenden Versuche wurden in einer Glasapparatur von 2 l Inhalt, wie sie in Beispiel 1 beschrieben ist, ausgeführt. Die Gewichtsmengen sind in g angegeben. Die Reaktionstemperatur betrug in allen Fällen 120°C.

| | Beispiel 6 | 7 | 8 | 9 | 10 | 11 | 12 |
|---|---|---|---|---|---|---|---|
| Vorlage: | | | | | | | |
| Polyol A | 200 | 200 | 200 | 200 | 200 | 100 | 100 |
| Toluol | 25 | 25 | 25 | 25 | 25 | 25 | 25 |
| Eindosiertes Gemisch: | | | | | | | |
| Polyol A | 400 | 400 | 400 | 400 | 400 | 400 | 300 |
| Toluol | 50 | 50 | 50 | 50 | 50 | 50 | 50 |
| Acrylnitril | 240 | 240 | 240 | 200 | 200 | 300 | 360 |
| Styrol | 150 | 150 | 155 | 190 | 185 | 190 | 220 |
| As | 10 | – | – | – | – | 10 | – |
| MAS | – | – | 5 | – | 15 | – | 20 |
| DAS | – | – | – | 10 | – | – | – |
| MSA | – | 10 | – | – | – | – | – |
| TEA | – | – | 6 | – | – | 14 | – |
| DBA | – | – | – | – | 23 | – | 30,7 |
| TELA | – | – | – | 10,3 | – | – | – |
| MDELA | – | 12,1 | – | – | – | – | – |
| DMA | 16,8 | – | – | – | – | – | – |
| AIBN | 4 | 4 | 4 | 4 | 4 | 5 | 6 |
| Monomerumsatz (%) | 95,5 | 97,4 | 96,4 | 96,4 | 95,8 | 95,5 | 93,0 |
| Acrylnitril gebunden[1]) | 58,5 | 58,6 | 59,2 | 49,1 | 48,7 | 58,7 | 57,9 |
| Styrol gebunden[1]) | 38,8 | 38,5 | 39,5 | 48,3 | 48,1 | 39,2 | 38,5 |

Fortsetzung

| | Beispiel 6 | 7 | 8 | 9 | 10 | 11 | 12 |
|---|---|---|---|---|---|---|---|
| GC-Analyse des Destillats: | | | | | | | |
| % Acrylnitril | 18,4 | 16,0 | 11,7 | 10,5 | 12,1 | 19,7 | 36,9 |
| % Styrol | 2,3 | 3,4 | 2,9 | 3,7 | 3,9 | 2,9 | 5,1 |
| Feststoffgehalt (%) | 38,8 | 38,8 | 38,8 | 39,1 | 38,7 | 48,3 | 58,2 |
| OH-Zahl | 21,4 | 32,3 | 26,3 | 36,9 | 21,2 | 18,0 | 14,3 |
| Nicht filtrierbarer Anteil mit Maschenweite 100 µm | – | – | – | – | – | – | –[2]) |
| Viskosität (mPa · s) | 10 000 | 10 000 | 8000 | 6500 | 4300 | 13 000 | 21 000 |

[1]) %, bezogen auf Feststoffgehalt.
[2]) Nach Verdünnung mit Polyol A im Verhältnis 1 : 1.

| | Beispiel 13 | 14 | 15 | 16 | 17 | 18 |
|---|---|---|---|---|---|---|
| Vorlage: | | | | | | |
| Polyol B | 200 | 200 | 200 | 200 | 200 | 200 |
| Toluol | 25 | 25 | 50 | 50 | 50 | 50 |
| Zudosiertes Gemisch: | | | | | | |
| Polyol B | 400 | 400 | 400 | 400 | 300 | 200 |
| Toluol | 50 | 50 | 100 | 100 | 100 | 100 |
| Acrylnitril | 240 | 240 | 240 | 200 | 300 | 360 |
| Styrol | 150 | 145 | 155 | 190 | 190 | 215 |
| AS | 10 | – | – | 10 | – | 25 |
| MAS | – | 15 | – | – | 10 | – |
| ITS | – | – | 5 | – | – | – |
| TEA | 14 | – | 7,8 | – | – | – |
| DBA | – | 22,5 | – | – | – | 44,8 |
| DMA | – | – | – | 16,8 | – | – |
| TELA | – | – | – | – | 17,7 | – |
| AIBN | 4 | 4 | 4 | 4 | 5 | 6 |
| Monomerumsatz % | 93,7 | 94,5 | 93,1 | 95,1 | 97,8 | 95,2 |
| Acrylnitril gebunden[1]) | 58,2 | 58,9 | 58,0 | 48,4 | 59,7 | 59,0 |
| Styrol gebunden[1]) | 39,1 | 37,1 | 40,7 | 49,0 | 38,3 | 36,6 |
| GC-Analyse des Destillats: | | | | | | |
| % Acrylnitril | 22,0 | 17,4 | 24,3 | 16,1 | 8,2 | 22,9 |
| % Styrol | 3,4 | 4,8 | 3,7 | 3,6 | 2,9 | 6,0 |
| Feststoffgehalt (%) | 38,4 | 38,6 | 38,3 | 38,8 | 49,4 | 58,8 |
| OH-Zahl | 34,3 | 34,5 | 34,7 | 33,9 | 38,9 | 23,5 |
| Nichtfiltrierbarer Anteil (%, bezogen auf Feststoff) mit Maschenweite 100 μm | – | <0,1 | – | – | – | <0,1 |
| Viskosität (mPa·s) | 3300 | 2900 | 2900 | 4300 | 4600 | 4900 |

[1]) %, bezogen auf Feststoffgehalt

Beispiele 19 bis 26

Unter den gleichen Bedingungen wurden die folgenden Versuchsbeispiele durchgeführt:

| | Beispiel 19 | 20 | 21 | 22 | 23 | 24 | 25 | 26 |
|---|---|---|---|---|---|---|---|---|
| Vorlage: | | | | | | | | |
| Polyol C | 200 | 200 | 200 | 100 | 100 | – | – | – |
| Polyol E | – | – | – | – | – | 100 | 100 | 100 |
| Polyol F | – | – | – | – | – | 100 | 100 | 100 |
| Toluol | 50 | 50 | 50 | 50 | 50 | 50 | 50 | 50 |
| Eindosiertes Gemisch: | | | | | | | | |
| Polyol C | 400 | 400 | 400 | 400 | 300 | – | – | – |
| Polyol E | – | – | – | – | – | 300 | 250 | 250 |
| Polyol F | – | – | – | – | – | 300 | 250 | 250 |
| Acrylnitril | 240 | 240 | 240 | 300 | 360 | 160 | 240 | 240 |
| Styrol | 150 | 145 | 155 | 190 | 215 | 30 | 50 | 50 |
| AS | 10 | – | – | – | 25 | 10 | 10 | 10 |
| MAS | – | 15 | – | 10 | – | – | – | – |
| ITS | – | – | 5 | – | – | – | – | – |
| TELA | – | – | – | 17,7 | – | – | – | 20,7 |
| DBA | – | 22,5 | – | – | 44,8 | – | – | – |
| TEA | 14 | – | 7,8 | – | – | 14 | 14 | – |
| Toluol | 100 | 100 | 100 | 100 | 100 | 100 | 100 | 100 |
| AIBN | 4 | 4 | 4 | 5 | 6 | 2 | 3 | 3 |
| Monomerumsatz (%) | 98,4 | 94,5 | 94,6 | 97,8 | 95,2 | 95,0 | 96,2 | 97,0 |
| Acrylnitril gebunden | 59,9 | 58,6 | 58,3 | 58,2 | 58,9 | 79,3 | 81,0 | 80,2 |
| Styrol gebunden | 37,5 | 37,4 | 37,8 | 39,7 | 36,8 | 15,5 | 15,5 | 17,0 |

Fortsetzung

| | Beispiel 19 | 20 | 21 | 22 | 23 | 24 | 25 | 26 |
|---|---|---|---|---|---|---|---|---|
| GC-Analyse des Destillats: | | | | | | | | |
| % Acrylnitril | 3,0 | 12,8 | 11,8 | 13,6 | 16,1 | 16,3 | 3,9 | 19,0 |
| % Styrol | 1,7 | 3,0 | 1,3 | 1,2 | 3,7 | 1,0 | 3,3 | 1,2 |
| Feststoffgehalt | 39,6 | 38,5 | 38,7 | 48,6 | 58,7 | 19,2 | 29,2 | 29,4 |
| OH-Zahl | 34,0 | 34,7 | 34,4 | 46,8 | 23,1 | 67,9 | 59,7 | 74,6 |
| Viskosität (mPa · s) | 3800 | 2300 | 3250 | 8000 | 6000 | 700 | 3800 | 1000 |
| Nicht filtrierbarer Anteil (%) (Maschenweite 100 μm), bezogen auf Feststoffgehalt | — | — | 0,4 | — | — | — | — | — |

Beispiel 27

Nach dem Verfahren von Beispiel 1 wurde folgende Polymerpolyoldispersion hergestellt:

400 g Polyol D wurden unter Stickstoff auf 125°C erhitzt. Eine Mischung aus 930 g Acrylnitril, 240 g Styrol, 18 g AIBN, 1400 g Polyol D, 400 g Toluol, 30 g AS und 42 g TEA (hergestellt durch Vermischen der Einzelkomponenten in dieser Reihenfolge) wurde innerhalb von 3 Stunden zugegeben, wobei die Temperatur nach einem anfänglichen Anstieg auf 132°C konstant bei 125°C gehalten wurde. Anschließend wurde noch 2 Stunden bei der gleichen Temperatur nachgerührt und dann das Toluol zusammen mit den Restmonomeren bei 130°C im Wasserstrahlvakuum abdestilliert. Das in einer Trockeneisfalle aufgefangene Destillat wog 438,4 g und enthielt nach gaschromatographischer Analyse 1,27% Styrol, entsprechend 5,6 g, und 7,7% Acrylnitril, entsprechend 33,7 g. Daraus errechnet sich ein Monomerumsatz von 96,7% und ein Feststoffgehalt von 39,2%. Der Feststoff enthielt 77,2% gebundenes Acrylnitril und 20,2% gebundenes Styrol. Die OH-Zahl betrug 34,6, die Säurezahl 1,3 und die Viskosität bei Raumtemperatur 2850 mPa · s. Das Produkt war eine gelbliche, von nicht filtrierbaren Anteilen freie, einheitlich feinteilige Dispersion.

50 Teile dieser Dispersion wurden mit 50 Teilen des reinen Polyols D verdünnt und die Mischung mit reinem 2,4-Diisocyanatotoluol zu einem Präpolymeren mit einem NCO-Gehalt von 3,15% umgesetzt. Die Aushärtung erfolgte mit Diethyltoluylendiamin bei einem $NCO/NH_2$-Index von 110. Ein analoges Produkt wurde mit reinem Polyol D als alleiniger OH-Komponente hergestellt. An Prüfkörpern der beiden Elastomeren, welche 24 Stunden lang bei 110°C getempert worden waren, wurden die folgenden mechanischen Eigenschaften bestimmt:

| | Vergleichsversuch Polyol D | Erfindungsgemäßes Polymerpolyol |
|---|---|---|
| Zugfestigkeit (DIN 53 504) | 9,1 MPa | 25,1 MPa |
| Bruchdehnung (DIN 53 504) | 400% | 445% |
| Weiterreißfestigkeit (DIN 53 515) | 16,9 KN/m | 38,5 KN/m |
| Härte, Shore A (DIN 53 505) | 77 | 87 |
| Elastizität (DIN 53 512) | 55% | 52% |

Beispiele 28 bis 33

Nach dem Verfahren von Beispiel 1 wurden die folgenden Versuche durchgeführt. Die Mengen der Einsatzstoffe sind in g angegeben. Die Reaktionstemperatur betrug 125°C.

| | Beispiel 28 | 29*) | 30 | 31*) | 32 | 33*) |
|---|---|---|---|---|---|---|
| Vorlage: | | | | | | |
| Polyol A | 70 | 70 | 60 | 60 | 50 | 50 |
| Polyol G | 105 | 105 | 90 | 90 | 75 | 75 |
| Toluol | 25 | 25 | 25 | 25 | 25 | 25 |
| Eindosiertes Gemisch: | | | | | | |
| Polyol A | 210 | 210 | 180 | 180 | 150 | 150 |
| Polyol G | 315 | 315 | 270 | 270 | 225 | 225 |
| Toluol | 50 | 50 | 50 | 50 | 50 | 50 |
| Acrylnitril | 140 | 150 | 190 | 200 | 235 | 250 |
| Styrol | 150 | 150 | 200 | 200 | 250 | 250 |
| Methacrylsäure | 10 | – | 10 | – | 15 | – |
| Triäthylamin | 12 | – | 12 | – | 18 | – |
| AIBN | 3 | 3 | 4 | 4 | 5 | 5 |
| Monomerumsatz (%) | 96,2 | 96,9 | 97,1 | 95,9 | 95,5 | 96,8 |
| Acrylnitril gebunden | 45,5 | 49,2 | 47,0 | 48,9 | 45,7 | 48,9 |
| Styrol gebunden[1]) | 51,0 | 50,8 | 50,5 | 51,1 | 51,0 | 51,1 |
| Acrylnitril (Destillat) (%) | 12,9 | 13,6 | 11,8 | 14,7 | 12,0 | 13,3 |
| Styrol (Destillat) (%) | 4,3 | 4,2 | 6,1 | 4,7 | 4,25 | 2,7 |
| Polymerisatanteil (%) | 29,2 | 29,3 | 39,3 | 39,0 | 48,85 | 49,2 |
| OH-Zahl | 245,8 | 244 | 207,5 | 208,9 | 176 | 175 |
| Nicht filtrierbarer Anteil (bezogen auf Feststoff) bei 100 μm Maschenweite (%) | – | 14[2]) | <0,1[2]) | n.b. | <0,1[2]) | n.b. |
| Viskosität (mPa·s) | 3900 | 7000 | 7100 | – | 11 800 | – |

[1]) Bezogen auf Polymerisatanteil.
[2]) Nach Verdünnung mit Toluol im Verhältnis 1:1.
n.b. = nicht bestimmt.
*) Vergleich.

Die Produkte aus Versuch 28, 30 und 32 waren feinteilig und ganz bzw. weitgehend frei von gröberen Agglomeratteilchen. Dies wurde auch durch das Ablaufen einer Probe an einer sauberen Glasscheibe bestätigt, wobei sich ein dünner, gleichmäßig translucenter Film bildete. Versuch 29 lieferte ein stark mit Knötchen durchsetztes Präparat, während die beiden Versuche 31 und 33 zähe, grießige Massen ergaben, deren Viskosität auf über 100 000 mPa · s geschätzt und nicht gemessen wurde.

Die Produkte aus Beispiel 28, 30 und 32 wurden in einer üblichen Rezeptur für Integralhartschaum unter Verwendung von technischem Diphenylmethandiisocyanat zu Formteilen mit stufenförmig zunehmender Dicke verarbeitet. Dabei traten keine Fließstörungen auf; die resultierenden Formteile besaßen eine glatte, schlierenfreie Oberfläche und zeichneten sich durch verbesserte Wärmestandfestigkeit und einen erhöhten E-Modul aus.

Beispiele 34 bis 38

Analog Beispiel 1 wurden die folgenden Versuche durchgeführt. Die Reaktionstemperatur betrug jeweils 130°C.

| | Beispiel 34 | 35 | 36 | 37 | 38 |
|---|---|---|---|---|---|
| Vorlage: | | | | | |
| Polyol D | 200 | 200 | 200 | 100 | 100 |
| Eindosiertes Gemisch: | | | | | |
| Polyol D | 400 | 400 | 400 | 400 | 300 |
| Toluol | 125 | 125 | 125 | 125 | 125 |
| Acrylnitril | 240 | 240 | 160 | 300 | 360 |
| Styrol | 150 | 145 | 220 | 190 | 215 |
| AS | 10 | – | – | – | 25 |
| MAS | – | 15 | – | – | – |
| MSA | – | – | 20 | 10 | – |
| DMA | – | – | 49,4 | – | – |
| TEA | 14 | – | – | – | – |
| TELA | – | – | – | 30,4 | – |
| DBA | – | 22,5 | – | – | 44,8 |
| AIBN | 4 | 4 | 6 | 5 | 9 |
| Monomerumsatz (%) | 94,9 | 96,3 | 97,0 | 95,8 | 96,8 |
| Acrylnitril gebunden[1]) | 58,5 | 59,2 | 38,8 | 59,2 | 59,4 |
| Styrol gebunden[1]) | 38,8 | 36,9 | 56,0 | 38,7 | 36,3 |
| Acrylnitril im Destillat (%) | 20,3 | 16,8 | 14,6 | 11,3 | 18,2 |
| Styrol im Destillat (%) | 2,9 | 4,1 | 3,8 | 3,1 | 5,2 |
| Polymeranteil (%) | 39,6 | 40,2 | 41,8 | 50,4 | 60,4 |
| OH-Zahl | 33,6 | 33,6 | 32,8 | 46,9 | 22,7 |

Fortsetzung

| | Beispiel 34 | 35 | 36 | 37 | 38 |
|---|---|---|---|---|---|
| Nichtfiltrierbarer Anteil, bezogen auf Feststoff, bei 100 µm Maschenweite (%) nach Verdünnung 1 : 1 mit Toluol | <0,1 | <0,1 | 1,2 | <0,1 | 0,8 |

[1]) Bezogen auf Feststoffgehalt.

Beispiel 39

In einem mit Rührwerk, Rückflußkühler, Gaseinleitungsrohr, Temperaturmeßfühler und Dosiervorrichtung ausgerüsteten Reaktionsgefäß wurden 10 000 g des Polyols H vorgelegt, die Luft wurde durch Stickstoff verdrängt, und unter Rühren und Aufrechterhalten einer Stickstoffatmosphäre wurde der Kesselinhalt auf eine Temperatur von 125° C gebracht. Hierauf wurde mit Hilfe einer Membranpumpe im Laufe von 7 Stdn. eine Mischung aus 30 000 g Polyol H, 24 000 g Acrylnitril, 15 200 g Styrol, 800 g Acrylsäure, 1120 g Triäthylamin, 400 g AIBN und 4000 g Toluol eindosiert (Dosiergeschwindigkeit: ca. 200 ml/Min.). Nach beendeter Zugabe wurde noch 4 Stdn. bei 125° C weitergerührt und anschließend bei der gleichen Temperatur unter einem Vakuum von 2 mbar gestrippt. Das Destillat wurde in einer mit Trockeneis/Aceton gekühlten Vorlage mit nachgeschalteter Kühlfalle aufgefangen. Nach 11 Stdn. wurde das Strippen abgebrochen und das Produkt, eine schwach gelbe, feinteilige Dispersion, noch heiß über ein Sieb von 100 µm Maschenweite abgelassen. Zur Charakterisierung des Produkts wurden die folgenden Daten bestimmt bzw. aus Meßwerten berechnet:

| | |
|---|---|
| Destillatmenge | 5115 g |
| davon | |
| Acrylnitril | 18,6% |
| Styrol | 3,2% |
| Acrylsäure | 0,1% |
| Triäthylamin | Spur |
| Monomerumsatz | 97,2% |
| Acrylnitril gebunden[1]) | 57,6% |
| Styrol gebunden[1]) | 37,6% |
| Feststoffgehalt | 50,0% |
| Siebrückstand[1]) | 0,03% |
| Hydroxylzahl/Säurezahl | 14,3/1,7 |
| Viskosität bei 24° C | 11 800 mPa · s |

[1]) bezogen auf Gesamtfeststoffanteil.

Beispiele 40 – 43

Die folgenden Rezepturen wurden auf einer Hochdruckschäummaschine vom Typ UBT 78 der Firma Hennecke geschäumt. Bei dem mitverwendeten Polyol I handelt es sich um ein Polyäthertriol aus Polyoxypropylen- und endständigen Polyoxyäthylensequenzen, gestartet auf Trimethylolpropan, welches einen Äthylenoxidanteil von 13% und ein Molekulargewicht von 4800 sowie eine OH-Zahl von 35 besitzt. Die beiden verwendeten Polymerpolyole wurden in Nachstellung der beiden Beispiele 4 und 5 im halbkontinuierlichen Ansatz in einem Rührkessel von 400 l Inhalt hergestellt und entsprachen in allen analytischen Daten den in den genannten Versuchsbeispielen erhaltenen Produkten. Bei den Mengenangaben handelt es sich um Gewichtsteile.

| | Beispiel 40 | 41 | 42 | 43 |
|---|---|---|---|---|
| Polymerpolyol aus Beispiel 2 | 100 | 50 | – | – |
| Polymerpolyol aus Beispiel 3 | – | – | 100 | 50 |
| Polyol I | – | 50 | – | 50 |
| Wasser | 4,0 | 4,0 | 4,0 | 4,0 |
| Polysiloxanstabilisator | 1,2 | 1,2 | 1,2 | 1,2 |
| Triäthylendiamin | 0,05 | 0,05 | 0,05 | 0,05 |
| Dimethyläthanolamin | 0,2 | 0,2 | 0,2 | 0,2 |
| Zinndioctoat | 0,3 | 0,2 | 0,3 | 0,2 |
| Toluylendiisocyanat mit 80 Gew.-% Anteil des 2,4-Isomeren | 24,5 | 24,2 | 22,8 | 23,4 |
| Toluylendiisocyanat mit 65 Gew.-% Anteil des 2,4-Isomeren | 24,5 | 24,2 | 22,8 | 23,4 |
| NCO/OH-Kennzahl | 105 | 105 | 105 | 105 |
| Fördermenge Polyol (kg/min) | 26 | 28 | 26 | 28 |
| Steigzeit (sec) | 60 | 60 | 55 | 65 |
| Abbindezeit (sec) | 200 | 155 | 180 | 105 |

Eine Prüfung der mechanischen Eigenschaften ergab die folgenden Werte:

| | Beispiel 40 | 41 | 42 | 43 |
|---|---|---|---|---|
| Raumgewicht (kg/$m^3$) DIN 53 420 | 26 | 27 | 25 | 26 |
| Zugfestigkeit (kPa) DIN 53 571 | 115 | 100 | 120 | 95 |
| Bruchdehnung (%) DIN 53 571 | 120 | 155 | 80 | 120 |
| Stauchhärte bei 40% Verformung (kPa) DIN 53 577 | 7,1 | 4,4 | 11,0 | 5,8 |

Die ca. 2 m langen und 1 m breiten Schaumblöcke waren frei von Schaumstörungen wie z. B. Bodenblasen, Rissen oder Lunkern. Bei der Alterung unter Hitze- und Feuchtigkeitseinfluß wurde kein über das übliche Maß hinausgehender Werteabfall beobachtet. Alle Schaumstoffe sind mit Polyamidgewebe gut hochfrequenzverschweißbar.

Beispiel 44

Nach der folgenden Rezeptur wurde auf der in den vorhergehenden Beispielen genannten Schäummaschine ein hochelastischer Schaumstoff hergestellt.

| | |
|---|---|
| Polymerpolyol aus Beispiel 4 | 50 Gew.-Teile |
| Polyol I | 50 Gew.-Teile |
| Wasser | 4,0 Gew.-Teile |
| Triäthylendiamin | 0,2 Gew.-Teile |

| | |
|---|---|
| Zinndioctoat | 0,4 Gew.-Teile |
| Silikonstabilisator | 0,8 Gew.-Teile |
| Diäthanolamin | 1,5 Gew.-Teile |
| Tris-2-chloräthylphosphat | 2,0 Gew.-Teile |
| Toluylendiisocyanat mit einem Gew.-Anteil des 2,4-Isomeren von 80% | 50,6 Gew.-Teile |
| NCO/OH-Kennzahl | 105 |
| Fördermenge Polyol | 28 kg/min |
| Steigzeit | 49 sec |

An dem Schaum wurden die folgenden mechanischen Eigenschaften bestimmt.

| | |
|---|---|
| Raumgewicht | 26 kg/m³ |
| Zugfestigkeit | 115 k Pa |
| Bruchdehnung | 115% |
| Stauchhärte bei 40% Verformung | 4.1 k Pa |

Auch dieser Schaumstoff ließ sich im Hochfrequenzfeld gut mit Polyamidgewebe verschweißen.

Beispiel 45

Mit Hilfe eines Hochdruckschäumaggregats vom Typ HK 100 der Firma Hennecke wurden in einer Plattenform von den Abmessungen 900 mm Länge, 450 mm Breite, 10 mm Dicke Formteile aus Integralhartschaumstoff hergestellt. Dabei wurden folgende Formulierungen verschäumt (Mengenangaben in Gew.-Teilen):

| | A | B | C*) |
|---|---|---|---|
| Polymerpolyol aus Beispiel 13 | 60 | 60 | – |
| Handelsübliches Polymerpolyol (Feststoffgehalt 20%) | – | – | 60 |
| Polyol I | 3 | 3 | 3 |
| Äthylenglykol | 25 | 25 | 25 |
| Äthylendiamin-Propylenoxid-Addukt | 1,5 | 1,5 | 1,5 |
| Oberflächenaktives Mittel auf Fettsäurebasis | 7 | 7 | 7 |
| Silikonstabilisator | 1 | 1 | 1 |
| Metallorganischer Aktivator | 0,1 | 0,1 | 0,1 |
| Phosphor enthaltende Flammschutzmittelzubereitung | 20 | 30 | 20 |
| Trichlormonofluormethan | 8 | 8 | 8 |

*) Vergleich.

Als Isocyanatkomponente diente ein polymere Anteile enthaltendes Diphenylmethandiisocyanat, welches durch Abdestillieren eines Teils des Zweikernanteils aus dem rohen Phosgenierungsprodukt eines Anilin-Formaldehyd-Kondensats erhalten wurde. Es wurde in Mengen entsprechend einem NCO/OH-Index von 110 eingesetzt. Alle Formulierungen waren einwandfrei und ohne Schwierigkeiten zu verschäumen. Die Formteile besaßen eine glatte, blasenfreie Oberfläche, frei von Wirbel- und Fließspuren, und einen fehlerfreien geschäumten Kern. Folgende mechanischen Größen wurden bestimmt:

| | A | B | C*) |
|---|---|---|---|
| Rohdichte ($g/cm^3$) | 596 | 616 | 623 |
| Biege-E-Modul (mPa) | 1049 | 1012 | 435 |
| Zugfestigkeit (mPa) | 14,3 | 13,1 | 11,7 |
| Reißdehnung (%) | 8 | 6,6 | 17,4 |
| Dehnungs-E-Modul (mPa) | 634 | 607 | 372 |
| Wärmebiegetemperatur (°C) DIN 53 432 | 96 | 83 | 71 |

*) Vergleich.

Diese Daten zeigen die Vorteile der Verwendung von Polymerpolyolen mit hohen Polymerisatanteilen auf, wie sie nach der vorliegenden Erfindung hergestellt werden können.

Beispiele 46 – 55

Die folgenden Rezepturen wurden in einer Laborform (Aluminium, Rauminhalt 4 l, Abmessungen 20 x 20 x 10 cm) verschäumt. Dazu wurden die Rezepturkomponenten, ausgenommen das Isocyanat, in einem Pappbecher mittels eines hochtourigen Flügelrührers (2000 U/min) miteinander verrührt. Nach 60 sec wurde das Isocyanat zugefügt und die Mischung nach weiteren 10 sec Rührzeit in die Form gegossen, deren Deckel mit Klammern gesichert wurde. Nach 3 – 5 min Formstandzeit wurden die Formteile entnommen und zur Zellöffnung einmal komprimiert. Die in der Tabelle gemachten Mengenangaben stellen Gew.-Teile dar.

| | Beispiel 46 | 47*) | 48 | 49*) | 50 | 51*) | 52 | 53*) | 54 | 55*) |
|---|---|---|---|---|---|---|---|---|---|---|
| Polymerpolyol aus Beispiel 2 | 25 | – | 25 | – | 37,5 | – | 37,5 | – | 50 | – |
| Polyol H | 75 | 50 | 75 | 50 | 62,5 | 25 | 62,5 | 25 | 50 | – |
| Handelsübliches Polymerpolyol (Feststoffgehalt 20%) | – | 50 | – | 50 | – | 75 | – | 75 | – | 100 |
| Polymeranteil in der Polyolkomponente | 10 | 10 | 10 | 10 | 15 | 15 | 15 | 15 | 20 | 20 |
| Wasser | 2,9 | 2,9 | 3,6 | 3,6 | 2,9 | 2,9 | 3,6 | 3,6 | 2,9 | 2,9 |
| Handelsüblicher Aminaktivator | 0,72 | 0,72 | 0,82 | 0,82 | 0,72 | 0,72 | 0,82 | 0,82 | 0,72 | 0,72 |
| Handelsüblicher metallorganischer Katalysator | 0,02 | 0,02 | 0,02 | 0,02 | 0,02 | 0,02 | 0,02 | 0,02 | 0,02 | 0,02 |
| Handelsüblicher Polysiloxanstabilisator | 1,1 | 1,1 | 0,9 | 0,9 | 1,1 | 1,1 | 0,9 | 0,9 | 1,1 | 1,1 |
| Polyisocyanat aus Beispiel 45 | 35,6 | 35,6 | 44,8 | 44,8 | 35,6 | 35,6 | 44,7 | 44,7 | 35,3 | 35,3 |
| NCO/OH-Kennzahl | 100 | 100 | 100 | 100 | 100 | 100 | 100 | 100 | 100 | 100 |

*) Vergleich.

An den Schaumstoffkörpern wurden die in der folgenden Tabelle wiedergegebenen physikalischen Werte gemessen. Die unterschiedlichen Rohdichten bei gleichen Wasseranteilen in der Rezeptur sind auf unterschiedliche Einfüllmengen des Schäumgemischs zurückzuführen. Ein Vergleich der Stauchhärte ist in diesen Fällen durch Normierung auf ein einheitliches Raumgewicht möglich. Die entsprechenden Werte sind ebenfalls in die Tabelle aufgenommen.

Der Vergleich des Polymerpolyols aus Beispiel 2 mit dem handelsüblichen Polymerpolyol, bei jeweils gleichem Polymerisatanteil in der Rezeptur, zeigt für ersteres eine leichte bis deutliche Überlegenheit in den mechanischen Eigenschaften. In der optischen Qualität der Formteile (Homogenität, Freiheit von Kanten- und Innenrissen, Zellstruktur und Hautbildung) wurden keine Unterschiede beobachtet.

| | Beispiel 46 | 47*) | 48 | 49*) | 50 | 51*) | 52 | 53*) | 54 | 55*) |
|---|---|---|---|---|---|---|---|---|---|---|
| Rohdichte (kg/m$^3$) DIN 53 420 | 44 | 42 | 37,5 | 32 | 44 | 40 | 38 | 32 | 43 | 40 |
| Zugfestigkeit (KPa) DIN 53 571 | 190 | 165 | 180 | 155 | 200 | 200 | 215 | 175 | 210 | 200 |
| Bruchdehnung (%) | 170 | 155 | 150 | 140 | 160 | 150 | 145 | 125 | 145 | 135 |
| Stauchhärte bei 40% Verformung DIN 53 577 (KPa) | 4,8 | 4,3 | 5,4 | 3,6 | 5,6 | 4,2 | 6,5 | 4,7 | 6,3 | 4,8 |
| Druckverformungsrest (%) DIN 53 572 | | | | | | | | | | |
| bei 90% Kompression | 7,6 | – | 9,8 | – | 9,4 | – | 13 | – | 9,7 | – |
| bei 50% Kompression | – | 4,9 | – | 8,2 | – | 6,0 | – | 6,3 | – | 7,3 |
| Stauchhärtevergleich durch Normierung auf einheitliches Raumgewicht: | | | | | | | | | | |
| Raumgewicht (kg/m$^3$) | 44 | 44 | 37,5 | 37,5 | 44 | 44 | 38 | 38 | 43 | 43 |
| Stauchhärte (KPa) | 4,8 | 4,7 | 5,4 | 4,7 | 5,6 | 5,0 | 6,5 | 5,9 | 6,3 | 5,4 |

*) Vergleich.

Beispiele 56 bis 59

Auch das Polymerpolyol aus Beispiel 3 wurde, mit Polyol H auf einen Festgehalt von 10% formuliert, mit dem ebenso eingestellten handelsüblichen Polymerpolyol verglichen. Die nicht erwähnten Rezepturkomponenten entsprechen denen in den Beispielen 46 bis 55. Auch hier sind die Mengen in Gew.-Teilen angegeben.

| | Beispiel 56 | 57*) | 58 | 59*) |
|---|---|---|---|---|
| Polymerpolyol aus Beispiel 3 | 25 | – | 25 | – |
| Polyol H | 75 | 50 | 75 | 50 |
| Handelsübliches Polymerpolyol | – | 50 | – | 50 |
| Wasser | 2,9 | 2,9 | 3,6 | 3,6 |
| Polyisocyanat | 36,4 | 36,4 | 45,6 | 45,6 |
| NCO/OH-Kennzahl | 100 | 100 | 100 | 100 |
| Rohdichte ($kg/m^3$) | 45 | 42 | 35,5 | 32 |
| Zugfestigkeit (KPa) | 205 | 165 | 175 | 155 |
| Bruchdehnung (%) | 160 | 155 | 140 | 140 |
| Stauchhärte (KPa) bei 40% Verformung | 5,0 | 4,2 | 5,5 | 3,6 |
| Stauchhärte bei einheitlichem Raumgewicht | | | | |
| Raumgewicht ($kg/m^3$) | 45 | 45 | 35,5 | 35,5 |
| Stauchhärte (KPa) | 5,0 | 4,8 | 5,5 | 4,3 |

*) Vergleich.

Auch in dieser Versuchsreihe wurden aus dem erfindungsgemäßen und dem handelsüblichen Polymerpolyol gleich gute Formteile bei problemloser Verschäumung erhalten. Es ist wiederum eine leichte Überlegeheit des erfindungsgemäßen Polymerpolyols in den mechanischen Eigenschaften festzustellen.

Beispiele 60 – 63

Heißhärtende Formschaumstoffe wurden in der in den vorhergehenden Beispielen beschriebenen Weise in der 4-l-Form hergestellt. Dabei wurden die folgenden Rezepturen verwandt (Mengenangaben in Gew.-Teilen):

| | Beispiel 60 | 61 | 62 | 63*) |
|---|---|---|---|---|
| Polymerpolyol aus Beispiel 20 | 25 | – | – | – |
| Polymerpolyol aus Beispiel 21 | – | 25 | – | – |
| Polymerpolyol aus Beispiel 24 | – | – | 17 | – |
| Polyol C | 75 | 75 | 83 | 100 |
| Polymerisatanteil im Polyol (%) | 10 | 10 | 10 | 10 |
| Wasser | 3,4 | 3,4 | 3,4 | 3,4 |
| Handelsüblicher Aminaktivator | 0,2 | 0,2 | 0,2 | 0,2 |
| Zinndioctoat | 0,1 | 0,1 | 0,1 | 0,1 |
| Silikonstabilisator | 1,0 | 1,0 | 1,0 | 1,0 |
| Toluylendiisocyanat mit 80% 2,4-Isomerengehalt | | | | |
| Kennzahl | 102 | 102 | 102 | 102 |

*) Vergleich.

Die mechanische Prüfung ergab folgende Werte:

| | Beispiel 60 | 61 | 62 | 63*) |
|---|---|---|---|---|
| Raumgewicht (kg/m$^3$) | 30 | 30 | 30 | 30 |
| Zugfestigkeit (KPa) | 130 | 125 | 120 | 110 |
| Bruchdehnung (%) | 180 | 165 | 125 | 180 |
| Stauchhärte 40% Kompression (KPa) | 4,4 | 4,7 | 5,3 | 3,7 |
| Druckverformungsrest 90% Kompression (%) | 4,7 | 5,3 | 6,2 | 3,5 |

*) Vergleich.

Alle Formteile waren offenzellig und frei von Innenrissen, Lunkern und Hautstörungen.

**Patentansprüche**

1. Verfahren zur Herstellung modifizierter Polyetherpolyole durch radikalische Polymerisation von

I) 1 – 60 Gew.-Teilen eines Gemisches aus
   A) 20 – 99,9 Gew.-% Acrylnitril
   B) 0 – 80 Gew.-% Styrol
   C) 0,1 – 10 Gew.-% einer $\alpha,\beta$-ungesättigten Mono- oder Polycarbonsäure und
   D) 0 – 20 Gew.-% einer oder mehrerer weiterer copolymerisationsfähiger, olefinisch ungesättigter Verbindungen
   in

II) 99 – 40 Gew.-Teilen eines Polyetherpolyols in Gegenwart eines freie Radikale liefernden Polymerisationsinitiators, dadurch gekennzeichnet, daß man die $\alpha,\beta$-ungesättigte Mono- oder

Polycarbonsäure in Form eines Salzes mit einem primären, sekundären oder tertiären Mono- oder Polyamin in Polyetherpolyolen mit Äquivalentgewichten von 100—3000 und einer Hydroxylfunktionalität von 2—8 einsetzt und bei Temperaturen von mindestens 100°C polymerisiert.

2. Verfahren nach Anspruch 1, dadurch gekennzeichnet, daß man als Amine aliphatische oder cycloaliphatische Amine oder Aminoalkohole, aromatische Amine oder heterocyclische Stickstoffbasen mit einem Molekulargewicht bzw. Äquivalentgewicht von 30 bis 150 verwendet.

3. Verfahren nach Anspruch 1 oder 2, dadurch gekennzeichnet, daß man als α,β-ungesättigte Carbonsäure (C) eine Verbindung aus der Gruppe Acrylsäure, Methacrylsäure, Crotonsäure, Ologomere der Acrylsäure mit der Formel

$$CH_2=CH-CO-O-(CH_2-CH_2-CO-O)_n-H$$

in welcher

n eine ganze Zahl von 1 bis 5 darstellt,

Maleinsäure, Fumarsäure, Itaconsäure, Citraconsäure, Halbester oder Halbamide α,β-ungesättigter Polycarbonsäuren und Halbester oder Halbamide gesättigter Polycarbonsäuren mit ungesättigten, polymerisationsfähigen Alkoholen bzw. Aminen einsetzt.

4. Verfahren nach Anspruch 1 bis 3, dadurch gekennzeichnet, daß man als copolymerisierbare Monomere (D) Ester α,β-ungesättigter Mono- oder Polycarbonsäuren mit ein- oder mehrwertigen Alkoholen, Vinylester, Vinylhalogenide α,β-ungesättigte Nitrile, α,β-ungesättigte Amide, Aminoalkylester α,β-ungesättigter Mono- oder Polycarbonsäuren, Ester der Vinylphosphonsäure oder vinylaromatische Kohlenwasserstoffe verwendet.

5. Verfahren nach Anspruch 1 bis 4, dadurch gekennzeichnet, daß als radikalbildende Polymerisationsinitiatoren solche verwendet werden, deren Halbwertzeit des thermischen Zerfalls bei der Polymerisationstemperatur kleiner als 5 Minuten ist.

6. Verfahren nach Anspruch 1 bis 5, dadurch gekennzeichnet, daß man als Polymerisationsinitiatoren organische Peroxide oder aliphatische Azoverbindungen verwendet.

7. Verfahren nach Anspruch 1 bis 5, dadurch gekennzeichnet, daß man als Polymerisationsinitiator Azobisisobutyronitril verwendet.

8. Verfahren nach Anspruch 1 bis 7, dadurch gekennzeichnet, daß man die Polymerisation in Gegenwart eines inerten organischen Lösungsmittels, vorzugsweise Toluol, durchführt.

9. Verfahren nach Anspruch 1 bis 8, dadurch gekennzeichnet, daß man die Polymerisation bei Temperaturen zwischen 100° und 140°C durchführt.

10. Verfahren zur Herstellung von gegebenenfalls zellförmigen Polyurethankunststoffen durch Umsetzung von

A) Polyisocyanaten mit
B) durch Pfropfpolymerisation modifizierten Polyätherpolyolen sowie gegebenenfalls
C) weiteren höhermolekularen und/oder niedermolekularen, gegenüber Isocyanaten reaktive Wasserstoffatome enthaltenden Verbindungen, gegebenenfalls in Gegenwart von
D) Treibmitteln, Katalysatoren und weiteren an sich bekannten Zusatzstoffen,

dadurch gekennzeichnet, daß als Komponente B) gemäß Anspruch 1 bis 9 hergestellte modifizierte Polyetherpolyole eingesetzt werden.

## Claims

1. Process for the production of modified polyether polyols by the radical polymerisation of

I) 1—60 parts by weight of a mixture of
  A) 20—99.9% by weight of acrylonitrile,
  B) 0—80% by weight of styrene,
  C) 0,1—10% by weight of an α,β-unsaturated monocarboxylic or polycarboxylic acid and
  D) 0—20% by weight of one or more other copolymerisable, olefinically unsaturated compounds

  in
II) 99—40 parts by weight of a polyether polyol in the presence of a polymerisation initiator forming free radicals, characterised in that the α,β-unsaturated monocarboxylic or polycarboxylic acid is used in the form of a salt with a primary, secondary or tertiary monoamine or polyamine in polyether polyols having equivalent weights of 100—3000 and a hydroxyl functionality of 2—8 and the polymerisation is carried out at temperatures of at least 100°C.

2. Process according to Claim 1, characterised in that the amines used are aliphatic or cycloaliphatic amines or amino alcohols, aromatic amines or heterocyclic nitrogen bases having a molecular weight or an equivalent weight of 30 to 150.

3. Process according to Claim 1 or 2, characterised in that the α,β-unsaturated carboxylic acid (C) used is a compound from the group comprising acrylic acid, methacrylic acid, crotonic acid, oligomers of acrylic acid having the fromula

$$CH_2=CH-CO-O-\!\!\left(-CH_2-CH_2-CO-O-\right)_{\!n}H$$

in which

n is an integer from 1 to 5,

maleic acid, fumaric acid, itaconic acid, citraconic acid, semiesters or semiamides of α,β-unsaturated polycarboxylic acids and semiesters or semiamides of saturated polycarboxylic acids with unsaturated, polymeridable alcohols or amines.

4. Process according to Claim 1 to 3, characterised in that the copolymerisable monomers (D) used are esters of α,β-unsaturated monocarboxylic or polycarboxylic acids with monohydric or polyhydric alcohls, vinyl esters, vinyl halides, α,β-unsaturated nitriles, α,β-unsaturated amides, aminoalkyl esters of α,β-unsaturated monocarboxylic or polycarboxylic acids, esters of vnyl phosphonic acid or vinyl aromatic hydrocarbons.

5. Process according to Claim 1 to 4, characterised in that the radical-forming polymerisation initiators used have half life periods of the thermal decomposition process at the polymerisation temperature of less than 5 minutes.

6. Process according to Claim 1 to 5, characterised in that organic peroxides or aliphatic azo compounds are used as the polymerisation initiators.

7. Process according to Claim 1 to 5, characterised in that azo-bis-isobutyronitrile is used as the polymerisation initiator.

8. Process according to Claim 1 to 7, characterised in that the polymerisation is carried out in the presence of an inert organic solvent, preferably toluene.

9. Process according to Claim 1 to 8, characterised in that the polymerisation is carried out at temperatures between 100° and 140° C.

10. Process for the production of optionally cellular polyurethane plastics by reacting

A) polyisocyanates with
B) polyether polyols modified by graft polymerisation and, optionally,
C) other relatively high molecular weight and/or low molecular weight compounds containing isocyanatereactive hydrogen atoms, optionally in the presence of
D) blowing agents, catalysts and other additives known per se,

characterised in that modified polyether polyols produced in accordance with Claims 1 to 9 are used as component B).

## Revendications

1. Procédé de préparation de polyétherspolyols modifiés par polymérisation radicalaire de:

I) 1 – 60 parties en poids d'un mélange de
   A) 20 – 99,9% en poids d'acrylonitrile
   B) 0 – 80% en poids de styrène
   C) 0,1 – 10% en poids d'un acide monocarboxylique ou polycarboxylique α,β-insaturé et
   D) 0 – 20% en poids d'un ou plusieurs autres composés copolymérisables à insaturation oléfinique dans

II) 99 – 40 parties en poids d'un polyéther-polyol en présence d'un initiateur de polymérisation fournissant des radicaux libres, caractérisé en ce qu'on utilise l'acide monocarboxylique ou polycarboxylique α,β-insaturé sous forme d'un sel avec une mono-amine ou une polyamine primaire, secondaire ou tertiaire dans des polyétherspolyols ayant des poids équivalents de 100 – 3.000 et une fonctionnalité hydroxy de 2 – 8, tandis que l'on effectue la polymérisation à des températures d'au moins 100° C.

2. Procédé suivant la revendication 1, caractérisé en ce que, comme amines, on utilise des amines aliphatiques ou cycloaliphatiques, ou des amino-alcools, des amines aromatiques ou des bases azotées hétérocycliques ayant un poids moléculaire ou un poids équivalent de 30 à 150.

3. Procédé suivant la revendication 1 ou 2, caractérisé en ce que, comme acide carboxylique

α,β-insaturé (C), on utilise un composé choisi parmi le groupe comprenant l'acide acrylique, l'acide méthacrylique, l'acide crotonique, les oligomères de l'acide acrylique répondant à la formule:

$$CH_2=CH-CO-O-(-CH_2-CH_2-CO-O-)_n-H$$

dans laquelle

n représente un nombre entier de 1 à 5,

l'acide maléique, l'acide fumarique, l'acide itaconique, l'acide citraconique, les semi-esters ou les semi-amides d'acides polycarboxyliques α,β-insaturés, de même que les semi-esters ou les semi-amides d'acides polycarboxyliques saturés avec des amines ou des alcools insaturés polymérisables.

4. Procédé suivant les revendications 1 à 3, caractérisé en ce que, comme monomères copolymérisables (D), on utilise des esters d'acides monocarboxyliques ou polycarboxyliques α,β-insaturés avec des alcools monovalents ou polyvalents, des ersters vinyliques, des halogénures de vinyle, des mitriles α,β-insaturés, des amides α,β-insaturés, des esters amino-alkyliques d'acides monocarboxyliques ou polycarboxyliques α,β-insaturés, des esters de l'acide vinylphosphonique ou des hydrocarbures vinyliques aromatiques.

5. Procédé suivant les revendications 1 à 4, caractérisé en ce que, comme initiateurs de polymérisation formant des radicaux, on utilise ceux dont le temps de demi-réaction de la décomposition thermique à la température de polymérisation est inférieur à 5 minutes.

6. Procédé suivant les revendications 1 à 5, caractérisé en ce que, comme initiateuers de polymérisation, on utilise des peroxydes organiques ou des azo-composés aliphatiques.

7. Procédé suivant les revendications 1 à 5, caractérisé en ce que, comme initiateur de polymérisation, on utilise l'azobisisobutyronitrile.

8. Procédé suivant les revendications 1 à 7, caractérisé en ce qu'on effectue la polymérisation en présence d'un solvant organique inerte, de préférence, le toluène.

9. Procédé suivant les revendications 1 à 8, caractérisé en ce qu'on effectue la polymérisation à des températures comprises entre 100 et 140° C.

10. Procédé de fabrication de matières synthétiques de polyuréthanes éventuellement cellulaires en faisant réagir:

A) des polyisocanates avec
B) des polyéthers-polvols modifiés par polymérisation greffée, et éventuellement avec
C) d'autres composés de poids moléculaire très élevé et/ou de faible poids moléculaire contenant des atomes d'hydrogène réactifs vis-à-vis des isocyanates, éventuellement en présence
D) d'agents moussants, de catalyseurs et d'autres additifs connus en soi,

caractérisé en ce que, comme composant B, on utilise des polyéthers-polyols modifiés préparés conformément aux revendications 1 à 9.